# EUROPÄISCHE PATENTANMELDUNG

(11) **EP 2 706 211 A1**
(43) Veröffentlichungstag der Anmeldung: **12.03.2014**
(21) Anmeldenummer: 12183698.5
(22) Anmeldetag: 10.09.2012
(51) Int. Cl.: F02C 3/00, B01D 53/62

(54) **Gasturbinenanlage mit Nachverbrennungseinrichtung zur CO2-Abscheidung**

(71) Anmelder: Siemens Aktiengesellschaft, 80333 München (DE)
(72) Erfinder: Brunhuber, Christian, 91275 Auerbach (DE); Zimmermann, Gerhard, 91315 Höchstadt/Aisch (DE); Kremer, Hermann, 65835 Liederbach (DE); Rost, Mike, 91058 Erlangen (DE); Schneider, Rüdiger, 65817 Eppstein (DE); Strobelt, Frank, 90419 Nürnberg (DE); Vortmeyer, Nicolas, 91054 Erlangen (DE)

(57) **Zusammenfassung**

Gasturbinenanlage (1) umfassend wenigstens eine Gasturbine (10) mit einer Kompressionsstufe (11) und einer Expansionsstufe (12), eine Abgasleitung (20) zur Strömungsführung bei Betrieb der Gasturbine (10) aus der Expansionsstufe (12) austretenden Abgases, eine mit der Abgasleitung (20) fluidtechnisch gekoppelte CO₂-Abscheidungseinrichtung (30) zur Abscheidung wenigstens eines Teils des in dem geführten Abgas enthaltenen CO₂s, wobei in die Abgasleitung (20) zwischen Gasturbine (10) und CO₂-Abscheidungseinrichtung (30) fluidtechnisch eine Nachverbrennungseinrichtung (40) geschaltet ist, welche dazu ausgebildet ist, Brennstoff, insbesondere fossilen Brennstoff, unter Hinzunahme von Abgas nachzuverbrennen.

## Beschreibung

Die vorliegende Erfindung betrifft eine Gasturbinenanlage umfassend wenigstens eine Gasturbine gemäß dem Oberbegriff von Anspruch 1 sowie ein Verfahren zum Betrieb einer solchen Gasturbinenanlage.

Die Abscheidung von CO₂ aus Abgasen von prozesstechnischen bzw. kraftwerkstechnischen Anlagen gewinnt nicht nur aufgrund von immer strengeren umweltrechtlichen Rahmenbedingungen zunehmende Wichtigkeit. Vielmehr kann CO₂ auch als wertvolles Prozessgas in zahlreichen technischen Anwendungen eingesetzt werden und wird als solches nach gesucht. CO₂ wird insbesondere bei der Förderung von Rohöl aus unterirdischen Öllagerstätten für eine effizientere Gewinnung in diese eingepumpt, um nach Mischung mit dem dort befindlichen Rohöl eine gezielte Viskositätserniedrigung und damit verbesserte Fließfähigkeit des Rohöls zu erreichen. Aufgrund dieser Maßnahme ist eine erhöhte Ausbeute bei der Rohölförderung möglich, da das Rohöl bei Druckausübung mit einem geringeren Fließwiderstand aus den unterirdischen Gesteinsschichten entnommen werden kann.

Diese technisch gut beherrschte Methode der verbesserten Rohölgewinnung, die auch als Enhanced Oil Recovery (EOR)-Verfahren bezeichnet wird, erfordert eine große Angebotsmenge an CO₂. Um diese große Nachfrage an CO₂ decken zu können, werden kostenintensive und wartungsaufwendige Pipeline-Netzwerke zur Verfügung gestellt, um mit diesen das in Raffinerieprozessen anfallende CO₂ zu den jeweiligen Öllagerstätten zu transportieren. Dieser Transport stellt eine große logistische und infrastrukturelle Aufgabe dar, da der Ort der CO₂-Gewinnung typischerweise mehrere hundert oder tausend Kilometer von den betreffenden Öllagerstätten entfernt liegt. Um diesem Problem zu begegnen, ist denkbar, die Abscheidung von CO₂ aus Kraftwerksanlagen als geeignete Quelle für das bei der Rohölförderung verpresste CO₂ heranzuziehen. Derartige Kraftwerksanlagen könnten nicht nur näher am Ort der betreffenden Öllagerstätten angesiedelt werden, sondern wären auch gleichzeitig in der Lage, das bei der Rohölförderung anfallende Erdgas in geeigneter Weise zur Energieerzeugung zu verwenden. So werden etwa technische Ansätze diskutiert, die eine gezielte CO₂-Abscheidung aus den Abgasen einer Gasturbinenanlage ermöglichen, wobei die CO₂-Abscheidung mittels einer großtechnischen CO₂-Abscheidungseinrichtung erfolgen kann.

Aufgrund von wirtschaftlichen wie technischen Gesichtspunkten stellt sich die chemische Absorption von CO₂ aus einem Abgas, die einem Verbrennungsschritt nachgeschaltet ist, als geeignetes Verfahren dar, CO₂ auch in großtechnischen Mengen zu gewinnen. Bspw. ist hier die von der Anmelderin entwickelte CO₂-Abscheidung mit Hilfe von einer wässrigen Lösung von Aminosäuresalzen zu nennen, die auch in der Anmeldung DE 10 2010 013 729.4 näher beschrieben ist. In diesem auch als Postcap-Verfahren bezeichneten CO₂-Abscheidungsverfahren wird das in dem Abgas befindliche CO₂ mittels eines Waschmittels, der wässrigen Lösung von Aminosäuresalzen, ausgewaschen, wobei eine komplexe Verbindung entsteht, die nachfolgend in einem thermischen Behandlungsschritt wieder in die Ausgangssubstanzen getrennt werden kann. Während dieses thermischen Behandlungsschritts wird das CO₂ gezielt freigesetzt und kann für weitere Anwendungen zur Verfügung gestellt werden.

Die während des Verfahrens stattfindende chemische Absorption sowie die nachfolgende Desorption zur Freisetzung von CO₂ benötigt elektrische Energie, in erster Linie etwa zum Betrieb von Pumpen, Gebläsen und Verdichtern, sowie thermische Energie, um in dem Desorptionsschritt das in dem Absorptionsschritt eingesetzte Waschmittel in einer Regenerationsreaktion wieder gewinnen zu können. Die Bereitstellung dieser thermischen Energie erfolgt typischerweise über eine gezielte Wärmezufuhr mittels Prozessdampf, welcher von der Kraftwerksanlage zur Verfügung gestellt werden kann.

Neben den Investitionskosten, sind in erster Linie die Energiekosten im Sinne von Betriebskosten für die Gesamtbilanz eines solchen CO2-Abscheidungsverfahrens nachteilig, da verhältnismäßig große thermische Energiemengen vor allem für den Desorptionsschritt erforderlich sind.

Folglich ist es wünschenswert, eine Gasturbinenanlage vorzuschlagen, die eine effiziente Abscheidung von CO₂ aus den Abgasen ermöglicht, jedoch auch gleichzeitig ausreichende Mengen an CO₂ für die Rohölgewinnung zur Verfügung stellen kann. Weiterhin ist es wünschenswert, eine für die Bereitstellung von CO₂ effizient zu betreibende Gasturbinenanlage vorzuschlagen, die durch einfache Nachrüstung bereits bestehender Gaskraftwerke zur effizienten CO₂-Abscheidung beitragen kann. Fernerhin soll ein Verfahren angegeben werden, welches eine effiziente Bereitstellung von CO₂ bei Betrieb einer Gasturbinenanlage erlaubt.

Diese der vorliegenden Erfindung zugrunde liegenden Aufgaben werden durch eine Gasturbinenanlage gemäß Anspruch 1 sowie durch ein Verfahren zum Betrieb einer solchen Gasturbinenanlage gemäß Anspruch 13 gelöst.

Insbesondere werden diese Aufgaben durch eine Gasturbinenanlage gelöst, welche wenigstens eine Gasturbine mit einer Kompressionsstufe und einer Expansionsstufe umfassen, sowie eine Abgasleitung zur Strömungsführung bei Betrieb der Gasturbine aus der Expansionsstufe austretenden Abgases, sowie eine mit der Abgasleitung fluidtechnisch gekoppelte CO₂-Abscheidungseinrichtung zur Abscheidung wenigstens eines Teils des in dem geführten Abgas enthaltenen CO₂, wobei die Abgasleitung zwischen Gasturbine und CO₂-Abscheidungseinrichtung fluidtechnisch eine Nachverbrennungseinrichtung geschaltet ist, welche dazu ausgebildet ist, Brennstoff, insbesondere fossilen Brennstoff, unter Hinzunahme von Abgas nachzuverbrennen.

Weiterhin werden die der vorliegenden Erfindung zugrundeliegenden Aufgaben gelöst durch ein Verfahren zum Betrieb einer Gasturbinenanlage, die wenigstens eine Gasturbine mit einer Kompressionsstufe und einer Expansionsstufe umfasst, sowie eine Abgasleitung zur Strömungsführung bei Betrieb der Gasturbine aus der Expansionsstufe austretenden Abgases, sowie eine mit der Abgasleitung fluidtechnisch gekoppelte CO₂-Abscheidungseinrichtung zur Abscheidung wenigstens eines Teils des in dem geführten Abgas enthaltenen CO₂, wobei die folgenden Schritte umfasst sind,
- Betreiben der Gasturbine und Einleitung des aus der Expansionsstufe austretenden Abgases in die Abgasleitung;
- Nachverbrennen von Brennstoff, insbesondere von fossilem Brennstoff, durch Hinzunahme des in der Abgasleitung befindlichen Abgases mittels einer Nachverbrennungseinrichtung;
- Abscheiden wenigstens eines Teils des in dem geführten Abgas enthaltenen CO₂ in einer CO₂-Abscheidungseinrichtung.

Erfindungsgemäß ist folglich vorgesehen, das aus der Gasturbine austretende Abgas mittels einer Abgasleitung fluidtechnisch zu einer Nachverbrennungseinrichtung zu führen, um Brennstoff, insbesondere fossilen Brennstoff, unter Hinzunahme dieses Abgases nachzuverbrennen. Hierbei wird weiterer Brennstoff, insbesondere fossiler Brennstoff verbraucht, der zu einer Erhöhung des CO₂-Gehalts des nachverbrannten Abgases führt im Vergleich zu dem CO₂-Gehalt des aus der Gasturbine austretenden Abgases. Dem entsprechend ist es möglich, den CO₂-Gehalt des der CO₂-Abscheidungseinrichtung zugeführten Abgas deutlich zu erhöhen. Aufgrund der Erhöhung des anteiligen CO₂-Gehalts in dem Abgas kann in der CO₂-Abscheidungseinrichtung auch eine vergrößerte Menge an CO₂ während eines vorbestimmten Zeitintervalls abgeschieden werden. Dementsprechend kann auch der aus der CO₂-Abscheidungseinrichtung abgeführte CO₂-Strom erhöht werden.

An dieser Stelle ist darauf hinzuweisen, dass das zur Nachverbrennungseinrichtung geführte Abgas der Gasturbine nicht das gesamte aus der Gasturbine abgeleitete Abgas umfassen muss. Vielmehr ist es auch möglich, aus der Gasturbine Abgasteilströme zu entnehmen, welche zur Nachverbrennung hinzugenommen werden. Weiterhin ist es auch möglich, einzelne Abgasströme zusammenzuführen bevor diese in einem einheitlichen Prozess zur Nachverbrennung hinzugenommen werden.

Erfindungsgemäß ist es möglich, verhältnismäßig große Mengen an CO₂ mit Hilfe der CO₂-Abscheidungseinrichtung in einem vorbestimmten Zeitintervall bereitzustellen, die wiederum nachfolgenden Nutzungen zugeführt werden können. Gemäß einer ersten besonders bevorzugten Ausführungsform der erfindungsgemäßen Gasturbinenanlage ist vorgesehen, dass in die Abgasleitung zwischen Gasturbine und Nachverbrennungseinrichtung fluidtechnisch ein erster Abhitzedampferzeuger geschaltet ist, der mit einem ersten Wasser-Dampf-Kreislauf einer ersten Dampfturbinenanlage gekoppelt ist. Demgemäß ist der Gasturbinenprozess mit einem Gas- und Dampfprozess gekoppelt, welche Kombination kraftwerkstechnisch besonders effizient zur Bereitstellung von elektrischer Energie eingesetzt werden kann. Weiterhin kann die in dem ersten Abhitzedampferzeuger befindliche thermische Energie in vorteilhafter Weise wenigstens teilweise ausgekoppelt werden, um damit bspw. die CO₂-Abscheidungseinrichtung mit ausreichend Prozesswärme zu versorgen. Insbesondere bei einem chemischen CO₂-Abscheidungsverfahren gestaltet sich die Bereitstellung dieser thermischen Wärme als besonders energieeffizient.

Gemäß einer weiteren vorteilhaften Ausführungsform der Gasturbinenanlage ist vorgesehen, dass die Nachverbrennungseinrichtung eine Gasturbine ist, welche neben einer Kompressionsstufe eine Expansionsstufe aufweist, die eine Expansion des Abgases auf ein Druckniveau erlaubt, welches dem Druckniveau des in die Kompressionsstufe der betreffenden Gasturbine eingeleiteten Abgases im Wesentlichen entspricht. Insbesondere beträgt der Druck des aus der Expansionsstufe abgeleiteten Abgases etwa 1 atm. Ausführungsgemäß kann die Nachverbrennung durch eine industrieübliche Gasturbine erfolgen, die in die Abgasleitung zwischen Gasturbine und CO₂-Abscheidungseinrichtung fluidtechnisch geschaltet ist. Eine Nachrüstung bereits bestehender Gaskraftwerke mittels einer solchen Nachverbrennungseinrichtung ist leicht möglich.

Gemäß einer besonders bevorzugten Ausführungsform der erfindungsgemäßen Gasturbinenanlage ist vorgesehen, dass die Nachverbrennungseinrichtung eine Gasturbine ist, welche eine Expansionsstufe aufweist, die lediglich eine Expansion auf ein Druckniveau erlaubt, welches über dem Druckniveau des in die Kompressionsstufe der betreffenden Gasturbine eingeleiteten Abgases liegt. Die Gasturbine erfüllt folglich auch die Funktion eines Kompressors. Aufgrund der relativen Druckerhöhung des von der Nachverbrennungseinrichtung abgeleiteten Gases kann durch die Kompression eine Verminderung des abgeleiteten Volumenstroms erreicht werden. Eine derartige Verminderung des Volumenstroms des Abgases erhöht jedoch die Effizienz der CO₂-Abscheidungseinrichtung zusätzlich, da das CO₂ aus einem vergleichsweise geringeren Strömungsvolumen abgeschieden werden kann. Das Strömungsvolumen hingegen ist jedoch ein wesentlicher Effizienz bestimmender Faktor bei Betrieb der CO₂-Abscheidungseinrichtung. Für die ausführungsgemäße CO₂-Abscheidung ist es jedoch erforderlich, dass die CO₂-Abscheidungseinrichtung ebenfalls auf einem Druckniveau betrieben werden kann, welches über dem Niveau des freien Umgebungsdruckes liegt. Dies ist jedoch technisch umsetzbar.

Gemäß einer weiteren vorteilhaften Ausführungsform der erfindungsgemäßen Gasturbinenanlage ist vorgesehen, dass die Nachverbrennungseinrichtung eine Gasturbine ist, welche keine Expansionsstufe aufweist bzw. deren Expansionsstufe entfernt wurde. Eine derartige Gasturbine als Nachverbrennungseinrichtung erlaubt bei Betrieb wiederum nur eine, wenn überhaupt verminderte Expansion des Abgases, wodurch die Gasturbinenanlage die Funktionalität eines Kompressors aufweist. Das aus dieser Gasturbine abgeleitete Abgas weist wiederum ein Druckniveau auf, welches über dem Druckniveau des in die Kompressionsstufe der betreffenden Gasturbine eingeleiteten Abgases liegt. Dem gemäß ist wie weiter oben bereits beschrieben, eine effizientere CO₂-Abscheidung mit Hilfe der CO₂-Abscheidungseinrichtung aufgrund eines verminderten Volumenstromes des Abgases möglich.

Gemäß einer weiteren vorteilhaften Ausführungsform der Gasturbinenanlage ist vorgesehen, dass in die Abgasleitung zwischen der CO₂-Abscheidungseinrichtung und der Nachverbrennungseinrichtung ein zweiter Abhitzedampferzeuger fluidtechnisch geschaltet ist, der mit einem zweiten Wasser-Dampf-Kreislauf einer zweiten Dampfturbinenanlage gekoppelt ist. Der zweite Abhitzedampferzeuger vermag das Temperaturniveau des aus der Nachverbrennungseinrichtung abgeleiteten Abgases zu senken, um es bspw. auf ein Niveau zu bringen, welches für die Einführung in die CO₂-Abscheidungseinrichtung geeignet ist. Insbesondere dann, wenn die CO₂-Abscheidungseinrichtung auf einem chemischen Absorptionsverfahren beruht, kann es erforderlich sein, um die Degradierung eines Waschmittels oberhalb eines kritischen Temperaturniveaus zu vermeiden, das Abgas unter diesem kritischen Temperaturniveau zu halten. Ist bspw. die Nachverbrennungseinrichtung im Sinne einer nicht weiter modifizierten Gasturbine ausgeführt, erreicht die Abgastemperatur abstromseitig in Bezug auf die Nachverbrennungseinrichtung mitunter Temperaturen von mehr als 500°C. Ist andererseits die Nachverbrennungseinrichtung etwa im Sinne eines Kompressors ausgeführt, erreicht die Abgastemperatur abstromseitig in Bezug auf die Nachverbrennungseinrichtung mitunter Temperaturen von mehr als 1000°C. Eine, wie von der Anmelderin entwickelte chemische Absorption von CO₂ aufgrund von Auswaschen mit Hilfe eines Aminosäuresalzes in wässriger Lösung erlaubt jedoch nur die Zuführung von Abgas, welches höchstens 200 °C aufweist. Anderenfalls ist mit der Degradierung des Waschmittels zu rechnen, so dass die Effizienz der CO₂-Abscheidung mitunter signifikant reduziert wird.

Weiterhin kann es vorteilhaft sein, die mit Hilfe des zweiten Abhitzedampferzeugers entnommene thermische Energie aus dem Abgasstrom der CO₂-Abscheidungseinrichtung zuzuführen, um diese mit Prozesswärme zu versorgen. Insbesondere ist es vorteilhaft, die Desorption für eine Wiedergewinnung des eingesetzten chemischen Absorptionsmittels (Waschmittel) mit thermischer Wärme aus diesem zweiten Abhitzedampferzeuger bzw. aus dem damit gekoppelten Wasser-Dampf-Kreislauf zu versorgen.

Gemäß einer weiterführenden Ausführungsform dieser Gasturbinenanlage ist vorgesehen, dass der zweite Wasser-Dampf-Kreislauf mit dem ersten Wasser-Dampf-Kreislauf fluidtechnisch gekoppelt ist. Diese Kopplung ermöglicht ein gemeinschaftliches Prozess- und Wärmemanagement, wodurch eine vereinfachte Handhabung der gesamten Gasturbinenanlage resultiert.

Gemäß einem weiteren Aspekt der vorliegenden Erfindung ist es ausführungsgemäß möglich, dass in die Abgasleitung zwischen CO₂-Abscheidungseinrichtung und Nachverbrennungseinrichtung fluidtechnisch eine Quencheinheit geschaltet ist, in welcher Wasser in das Abgas eingebracht wird. Die Einbringung von Wasser in das warme Abgas erlaubt eine gezielte Abkühlung des Abgases auf ein Temperaturniveau, welches bspw. für die Einführung in die CO₂-Abscheidungseinrichtung ohne Nachteile für den Abscheidungsprozess geeignet ist. Hierbei wird insbesondere Wasser in den Abgasstrom gesprüht bzw. gerieselt, wobei aufgrund der dabei aufzubringenden Verdampfungswärme eine Abkühlung des Abgasgemisches resultiert. Die Quencheinheit erfüllt hierbei im Wesentlichen eine vergleichbare Funktion wie der weiter oben beschriebene zweite Abhitzedampferzeuger. Entsprechend einer weiterführenden Ausführungsform ist es auch denkbar, einen zweiten Abhitzedampferzeuger in Kombination mit einer Quencheinheit vorzusehen. Die Quencheinheit ist insbesondere derart ausgestaltet, den durch die Nachverbrennungseinrichtung mitunter thermisch konditionierten Abgasstrom so weit abzukühlen, dass er lediglich ein Temperaturniveau von 200 °C oder geringer aufweist. Damit ist der Abgasstrom geeignet, in eine CO₂-Absorptionseinheit eingeführt zu werden, die eine CO₂-Absorption auf Grundlage der Absorption von CO₂ durch eine wässrige Lösung von Aminosäuresalzen erreicht.

Entsprechend einer weiteren Ausführungsform der Erfindung ist vorgesehen, dass in die Abgasleitung zwischen Nachverbrennungseinrichtung und CO₂-Abscheidungseinrichtung ein erster Wärmetauscher fluidtechnisch geschaltet ist, der dazu ausgebildet ist, Wärme aus dem Abgas auf einen von CO₂ gesäuberten Gasstrom zu übertragen, der aus der CO₂-Abscheidungseinrichtung abgeleitet wird. Aufgrund der thermischen Konditionierung des der CO₂-Abscheidungseinrichtung zugeleiteten Abgasstroms wird das Temperaturniveau auf einen für die CO2-Abscheidung geeigneten Arbeitsbereich vermindert. Typischerweise wird der von CO₂ gesäuberte Gasstrom als Reingastrom der freien Umgebung zugeleitet. Die Zuleitung erfolgt zur gezielten fluiddynamischen Ableitung meist über einen Schornstein. Hierbei ist es jedoch erforderlich, dass der abgeleitete Gasstrom ein Temperaturniveau aufweist, welches deutlich über dem Umgebungstemperaturniveau liegt. Nur so kann eine gezielte konvektive Ableitung des Gasstroms aus dem Schornstein erfolgen. Typischerweise weist der aus der CO₂-Abscheidungseinrichtung abgeleitete und von CO₂ gereinigte Gasstrom jedoch ein deutlich geringeres Temperaturniveau auf, welches eine derartige konvektive Ableitung nicht ohne weiteres erlaubt. Folglich ist es erforderlich, diesen Gasstrom mit zusätzlicher Wärme zu beaufschlagen, um sein konvektives Verhalten in dem Schornstein zu verbessern.

Entsprechend einer weiteren besonders bevorzugten Ausführungsform der Erfindung ist vorgesehen, dass in die Abgasleitung zwischen Nachverbrennungseinrichtung und CO₂-Abscheidungseinrichtung ein zweiter Wärmetauscher fluidtechnisch geschaltet ist, der dazu ausgebildet ist, Wärme aus dem Abgas auf mit CO₂ beladenes Waschmittel der CO₂-Abscheidungseinrichtung zu übertragen, welches sich insbesondere in der CO₂-Abscheidungseinrichtung befindet. Die ausführungsgemäße Wärmeübertragung wird hierzu insbesondere zur Regeneration des Waschmittels bei einem chemischen Absorptionsprozess vorgesehen. Gleichzeitig erlaubt der zweite Wärmetauscher eine Verminderung des Temperaturniveaus des der CO₂-Abscheidungseinrichtung zugeführten Abgases.

Entsprechend einer weiteren besonders bevorzugten Ausführungsform der Erfindung ist vorgesehen, dass die CO₂-Abscheidungseinrichtung eine Kälteeinheit aufweist, welche dazu ausgebildet ist, wenigstens teilweise das in dem Abgas enthaltene Wasser, insbesondere das in dem in der CO₂-Abscheidungseinrichtung abgeleiteten CO₂ enthaltene Wasser auszukondensieren. Die Kälteeinheit kann bspw. als Absorptionskälteeinheit, Adsorptionskälteeinheit, Kompressionskälteeinheit oder auch als Molekularstrahlkälteeinheit ausgebildet sein. Das aufgrund der Verbrennungen in dem Abgas enthaltene Wasser kann gezielt für weitere Nutzungen abgeschieden werden. Vor allem bei Betrieb der Gasturbinenanlage in sehr trockenen Regionen der Erde (Wüstenregionen) gestaltet sich diese Form der Wassergewinnung als besonders effizient und Ressourcen schonend. Aufgrund der bei Betrieb der Gasturbinenanlage anfallenden großen Mengen an Abgas ist auch mit wenigstens für die menschliche Nutzung, aber auch für die industrielle Nutzung, wirtschaftlichen Mengen an kondensiertem Wasser zu rechnen.

Entsprechend einer weiteren Ausführungsform der erfindungsgemäßen Gasturbinenanlage ist vorgesehen, dass die CO₂-Abscheidungseinrichtung neben einer Absorbereinheit (Absorber) auch eine Desorbereinheit (Desorber) aufweist, wobei mindestens die Absorbereinheit dazu ausgebildet ist, bei einem Druck betrieben zu werden, der über dem freien Umgebungsdruck, insbesondere mindestens 100 % über dem freien Umgebungsdruck liegt. Eine solche unter Druck betreibbare CO₂-Abscheidungseinrichtung ermöglicht die effiziente Abscheidung von CO₂ aufgrund von verminderten Volumenströmen. Anders ausgedrückt erlaubt eine unter Druck betreibbare CO₂-Abscheidungseinrichtung eine vergrößerte absolute Menge an CO₂ pro vorbestimmtem Zeitintervall im Vergleich zu einer lediglich unter dem freien Umgebungsdruck betriebenen CO₂-Abscheidungseinrichtung. Folglich resultiert eine merkbare Effizienzverbesserung der CO₂-Abscheidung.

Gemäß einer ersten Ausführungsform des erfindungsgemäßen Verfahrens zum Betrieb einer etwa vorab beschriebenen Gasturbinenanlage ist vorgesehen, dass die Abgasführung zwischen der Nachverbrennungseinrichtung und der CO₂-Abscheidungseinrichtung im Wesentlichen isobar erfolgt. Das aus der Nachverbrennungseinrichtung abgeleitete und in die CO₂-Abscheidungseinrichtung zugeleitete Abgas erfährt keine wesentliche Druckänderung, insbesondere keine Druckverminderung auf das Druckniveau der freien Umgebung. Folglich kann etwa bei vermindertem Volumenstrom die CO₂-Abscheidungseinrichtung effizienter und wirtschaftlicher betrieben werden. Hierbei ist es, wie weiter oben bereits ausgeführt, erforderlich, dass wenigstens die CO₂-Abscheidungseinrichtung teilweise unter Druck betrieben werden kann. Besonders vorteilhaft ist das ausführungsgemäße Verfahren also dann, wenn die Nachverbrennungseinrichtung auch eine Druckerhöhung bei dem ausgeleiteten Abgasstrom bewirkt.

Gemäß einer besonders bevorzugten Ausführungsform der Erfindung ist vorgesehen, dass die CO₂-Abscheidungseinrichtung wenigstens bereichsweise bei einem Druck betrieben wird, der über dem freien Umgebungsdruck, insbesondere mindestens 100 % über den freien Umgebungsdruck liegt. Bevorzugt wird auch die gesamte CO₂-Abscheidungseinrichtung unter erhöhtem Druck betrieben. Der Betrieb der CO₂-Abscheidungseinrichtung unter relativ erhöhtem Druck ermöglicht die Zuführung von relativ vergrößerten CO₂-Mengen pro vorbestimmtem Zeitintervall. In anderen Worten kann also bei fester CO₂-Menge die erforderliche Anlagengröße vermindert werden.

Gemäß einer weiteren Ausführungsform des erfindungsgemäßen Verfahrens ist vorgesehen, dass die Nachverbrennungseinrichtung derart betrieben wird, dass sich in Bezug auf die Nachverbrennungseinrichtung abstromseitige Menge an CO₂ pro Volumen in dem Abgas im Vergleich zur aufstromseitigen Menge um wenigstens 50 % erhöht, bevorzugt um wenigstens 80 % erhöht. Demgemäß kann einerseits ein wirtschaftlicher Betrieb der CO₂-Abscheidungseinrichtung ermöglicht werden, bei gleichzeitiger Bereitstellung von für die verbesserte Rohölförderung interessanten Mengen an CO₂.

Vergleichbare Vorteile ergeben sich auch aus einem ausführungsgemäßen Verfahren, welches sich dadurch kennzeichnet, dass die Nachverbrennungseinrichtung derart betrieben wird, dass sich der Druck des in Bezug auf die Nachverbrennungseinrichtung abstromseitigen Abgases um wenigstens 100% erhöht, bevorzugt um wenigstens 200% und ganz besonders bevorzugt um wenigstens 400% erhöht im Vergleich zum aufstromseitigen Druck. Aufgrund der Druckerhöhung kann ein Volumenstrom verminderter Betrieb der CO₂-Abscheidungseinrichtung vorgenommen werden, wobei die CO₂-Abscheidungseinrichtung auch in vorteilhafter Weise baulich kleiner ausgebildet sein kann. Folglich ist nicht nur eine verbesserte Betriebseffizienz zu erwarten, sondern auch eine vorteilhafte Investitionseffizienz.

Gemäß einer weiteren bevorzugten Ausführungsform der Erfindung ist vorgesehen, dass die Nachverbrennungseinrichtung derart betrieben wird, dass sich die Menge an O₂ pro Volumen in dem in Bezug auf die Nachverbrennungseinrichtung abstromseitigen Abgas im Vergleich zur aufstromseitigen Menge um wenigstens 50 % verringert, bevorzugt um wenigstens 70 % verringert. Aufgrund einer relativen Verringerung der O₂-Menge ist eine verhältnismäßig geringere Degradation des Waschmittels in einer CO₂-Vorrichtung zu erwarten, die insbesondere auf Grundlage eines chemischen Absorptionsprozesses betrieben wird, da Sauerstoff mitunter zu einer Oxidation des in der CO₂-Abscheidungseinrichtung eingesetzten Waschmittels führt.

Nachfolgend wird die Erfindung anhand von konkreten Ausführungsformen im Detail beschrieben. Hierbei sei darauf hingewiesen, dass die betreffenden Ausführungsformen anhand der gezeigten Figuren lediglich schematisch wiedergegeben sind. Die schematische Wiedergabe hat jedoch keinerlei Einschränkung hinsichtlich der konkreten Ausführung der dargestellten Ausführungsformen zur Folge.

Weiterhin ist darauf hinzuweisen, dass die in den nachfolgend gezeigten Figuren dargestellten Merkmale für sich alleine wie auch in Verbindung mit anderen Merkmalen, wie etwa ausführungsgemäß dargestellt, vorliegend beansprucht werden.

Es zeigen:
- Figur 1: eine erste Ausführungsform der erfindungsgemäßen Gasturbinenanlage in einer schematischen Schaltansicht;
- Figur 2: eine weitere Ausführungsform der erfindungsgemäßen Gasturbinenanlage in schematischer Schaltansicht;
- Figur 3: ein Flussdiagramm zur Darstellung einer Ausführungsform des erfindungsgemäßen Verfahrens zum Betrieb einer solchen Gasturbinenanlage.

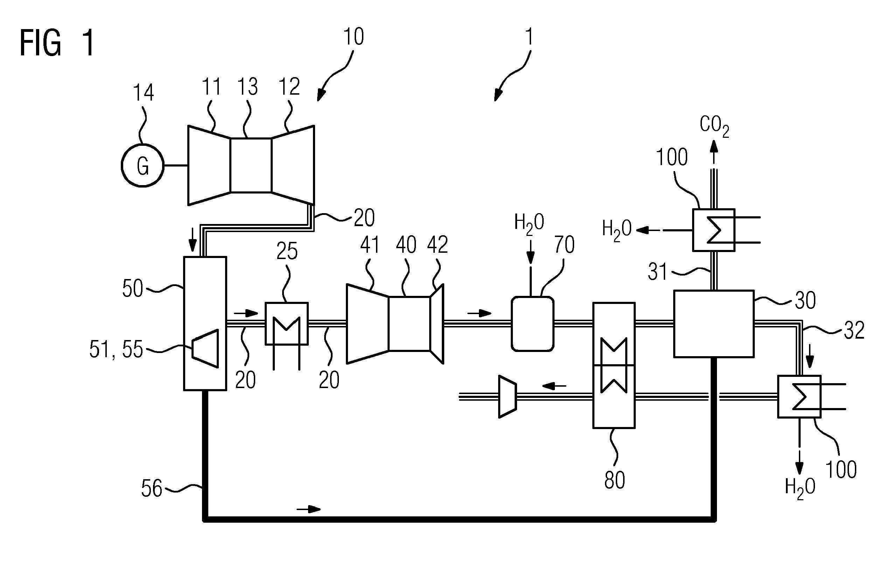

Figur 1 zeigt eine erste Ausführungsform der erfindungsgemäßen Gasturbinenanlage 1, welche eine Gasturbine 10 umfasst, die eine Kompressionsstufe 11, eine Brennkammer 13 sowie eine Expansionsstufe 12 aufweist. Die Gasturbine 10 ist mit einem Generator 14 über eine nicht weiter bezeichnete Welle gekoppelt und kann diese zur elektrischen Energieerzeugung rotatorisch antreiben. Das bei Betrieb der Gasturbine 10 aus der Expansionsstufe 12 abgeleitete Abgas wird wenigstens zum Teil in eine Abgasleitung 20 eingeleitet, die mit einem Abhitzedampferzeuger 50 fluidtechnisch gekoppelt ist. Der Abhitzedampferzeuger 50 wirkt mit einem Wasser-Dampf-Kreislauf zum Betrieb einer Dampfturbinenanlage 55 zusammen. Aufgrund der Wechselwirkung des Abgases, welches bei Verlassen der Expansionsstufe 12 ein Temperaturniveau zwischen 500°C und 600°C aufweist, mit dem Abhitzedampferzeuger 50 kommt es zu einem geeigneten Wärmeübertrag. Hierbei kann das Temperaturniveau des den Abhitzedampferzeuger verlassenden Abgases auf einen Wert von 100 °C vermindert werden. Gleichzeitig kann ein Druckniveau von etwa 1 atm vorliegen. Typischerweise weist das Abgas auch einen CO₂-Gehalt von etwa 3,5 Vol.-% sowie einen Sauerstoffgehalt von etwa 12 Vol.-% auf.

Ausführungsgemäß ist es vorgesehen, das Temperaturniveau des Abgases weiter zu vermindern und bspw. über eine als Wärmetauscher ausgeführte Kühleinheit 25 auf ein Temperaturniveau von etwa 50 °C herabzusetzen. Die Temperaturanpassung mittels der Kühleinheit 25 ist erforderlich, um Brennstoff, insbesondere fossilen Brennstoff, unter Hinzunahme von Abgas in der abstromseitig angeordneten Nachverbrennungseinrichtung 40 nachzuverbrennen. Insbesondere erweist sich eine solche Kühleinheit 25 als vorteilhaft, wenn die Nachverbrennungseinheit 40 als herkömmliche Gasturbine ausgebildet ist. Ausführungsgemäß kann die Nachverbrennungseinheit 40 auch als Gasturbine ausgebildet sein, die eine eingangsseitige Kompressionsstufe 41 sowie eine ausgangsseitig reduzierte Expansionsstufe 42 aufweist. Ebenfalls ist denkbar, dass die Gasturbine 40 keine Expansionsstufe 42 aufweist, bzw. diese vorab entfernt wurde.

Bei Betrieb dieser als Gasturbine ausgeführten Nachverbrennungseinrichtung 40 erfolgt eine Nachverbrennung von Brennstoff, insbesondere fossilen Brennstoff, unter Hinzunahme des Abgases in der Nachverbrennungseinrichtung 40. Durch diesen Nachverbrennungsvorgang wird einerseits das Temperaturniveau des aus der Nachverbrennungseinrichtung 40 abgeleiteten Abgases erhöht (bspw. bis zu 900°C und darüber), sowie das Druckniveau erhöht. Eine Erhöhung des Druckniveaus resultiert aus einer verminderten Expansion in der als Gasturbine ausgeführten Nachverbrennungseinrichtung 40. Folglich kann das aus der Nachverbrennungseinrichtung 40 abgeleitete Abgas unter erhöhtem Druck abgeleitet werden. Vorliegend ist bspw. ein Druck von 5 atm vorgesehen.

Um das Temperaturniveau des aus der Nachverbrennungseinrichtung 40 abgeleiteten Abgases zu vermindern, ist ausführungsgemäß eine Quencheinheit 70 vorgesehen, in welcher das Abgas mit Wasser besprüht bzw. berieselt wird. Aufgrund der verbrauchten Verdampfungswärme erfolgt eine Abkühlung des Abgases auf ein vorbestimmtes Temperaturniveau. Dieses kann etwa zwischen 100°C und 200°C liegen. Für eine weitere Abkühlung des Abgases sorgt ausführungsgemäß ein erster Wärmetauscher 80, welcher der Quencheinheit 70 abstromseitig nachgeschaltet ist. Hierbei wird Wärme aus dem Abgas auf das aus der CO₂-Abscheidungseinrichtung 30 austretende von CO₂ gereinigte Gas übertragen. Diese Übertragung dient insbesondere dazu, das aus der CO₂-Abscheidungseinrichtung 30 abgeleitete CO₂ gereinigte Gas soweit thermisch zu konditionieren, damit dieses konvektiv aus einem Schlot ausgeleitet werden kann.

Nach erfolgter thermischer Konditionierung erreicht das Abgas vor Einführung in die CO₂-Abscheidungseinrichtung 30 ein Temperaturniveau, welches unterhalb einer kritischen Temperatur im Hinblick auf den funktionsgemäßen Betrieb der CO₂-Abscheidungseinrichtung 30 liegt. Insbesondere, wenn die CO₂-Abscheidungseinrichtung 30 auf Grundlage eines chemischen Absorptionsprozesses erfolgt, ist darauf zu achten, dass das in die CO₂-Abscheidungseinrichtung eingeleitete Abgas eine Degradation des chemischen Absorptionsmittels (Waschmittels) verhindert. Ausführungsgemäß ist bspw. ein Temperaturniveau von 200°C für die Auswaschung von CO₂ aus dem Abgas mittels einer wässrigen Lösung von Aminosäuresalzen als kritisches Temperaturniveau vorgesehen. Vorliegend wird jedoch das Abgas so weit konditioniert, dass es auf einem Temperaturniveau von 70°C in die CO₂-Abscheidungseinrichtung 30 eingeleitet werden kann. Hierbei erfolgt die Einleitung im Wesentlichen auf einem Druckniveau, welches dem Druck entspricht, mit welchem das Abgas aus der Nachverbrennungseinrichtung 40 abgeleitet wurde.

Aufgrund der Nachverbrennung in der Nachverbrennungseinrichtung 40 wird der CO₂-Gehalt ausführungsgemäß auf etwa 7Vol.-% erhöht. Gleichzeitig wird der Sauerstoffgehalt ausführungsgemäß auf etwa 2 bis 3Vol.-% vermindert. Gleichzeitig tritt eine Druckerhöhung ein. Folglich kann die CO₂-Abscheidungseinrichtung bei vermindertem Volumenstrom betrieben werden, wobei jedoch ein Betrieb unter im Vergleich zum freien Umgebungsdruck erhöhtem Druckniveau ermöglicht sein muss. Vorliegend ist bspw. ein Betrieb auf einem Druckniveau von etwa 5 atm vorgesehen.

Nach Abscheidung des CO₂s in der CO₂-Abscheidungseinrichtung 30 kann das abgeschiedene CO₂ über eine CO₂-Ableitung zur weiteren Nutzung anderen Einrichtungen zugeleitet werden. Um das in dem abgeleiteten CO₂ befindliche Wasser zu gewinnen, kann in der CO₂-Ableitung 31 eine Kälteeinheit 100 vorgesehen sein, die vorliegend bspw. als Wärmetauscher ausgeführt ist. Nach Auskondensation des Wassers kann dieses gezielt aufgefangen und einer weiteren Nutzung zugeführt werden.

Ebenso ist es möglich, das Wasser aus dem von CO₂ gereinigten Gasstrom zurückzugewinnen, welcher Gastrom aus der CO₂-Abscheidungseinrichtung 30 über eine Reingasableitung 32 abgeleitet wird. Der so gereinigte Gasstrom wird, wie weiter oben erklärt, mit Hilfe des ersten Wärmetauschers 80 thermisch so weit konditioniert, dass er auf ein Temperaturniveau vermindert wird, welches für die Ausscheidung von flüssigem Wasser aus der Gasturbinenanlage 1 geeignet ist. Weiter stromabwärts ist eine nicht weiter mit Bezugszeichen versehene Expansionseinheit vorgesehen, die eine Expansion des in der Reingasableitung 32 befindlichen CO₂ gereinigten Abgases erlaubt, damit dieses etwa unter Umgebungsdruck in die freie Atmosphäre abgeleitet werden kann. Hierbei findet bspw. eine Druckverminderung von etwa 4,8 atm auf etwa 1 atm statt.

Um die CO₂-Abscheidungseinrichtung 30 mit ausreichend Prozesswärme zu versorgen, ist ausführungsgemäß vorgesehen, Prozessdampf mittels einer Dampfleitung 56 aus dem Abhitzedampferzeuger 50 und/oder aus dem Wasser-Dampf-Kreislauf 51 zu entnehmen, um diesen der Abscheidungseinrichtung 30 zuzuführen. Insbesondere ist der Prozessdampf geeignet, die Regeneration des Waschmittels in einem Desorptionsprozess und die Freisetzung von CO₂ thermisch anzutreiben.

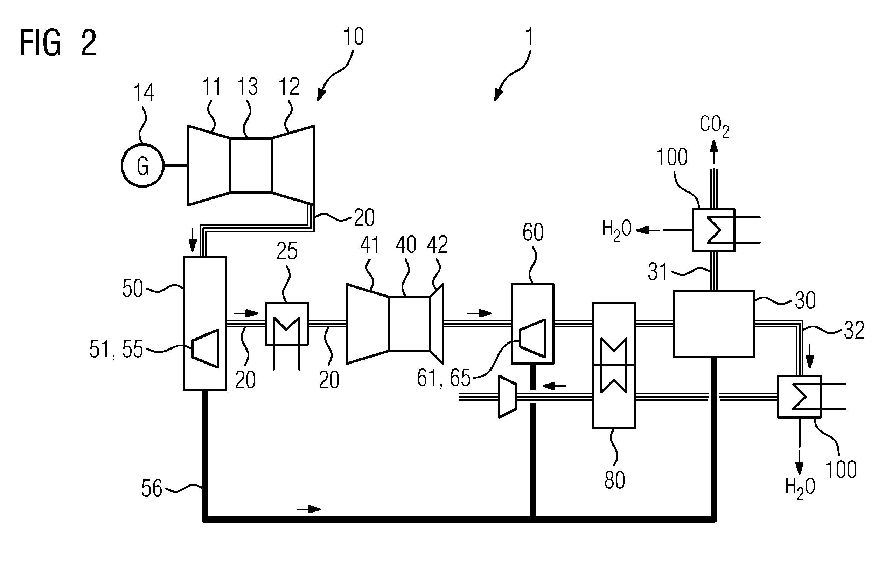

Figur 2 zeigt eine weitere Ausführungsform der erfindungsgemäßen Gasturbinenanlage 1, welche sich von der in Figur 1 gezeigten Ausführungsform lediglich dahingehend unterscheidet, dass die Quencheinheit 70 durch einen Abhitzedampferzeuger 60 ersetzt ist. Dieser Abhitzedampferzeuger 60 wiederum ist mit einem Wasserdampfkreislauf 61 einer Dampfturbinenanlage 65 gekoppelt. Folglich ermöglicht der Abhitzedampferzeuger 60, vergleichbar der Quencheinheit 70, eine Verminderung des Temperaturniveaus des Abgases, welches aus der Nachverbrennungseinrichtung 40 ausgeschieden wird.

Ausführungsgemäß ist es auch denkbar, den Wasser-Dampf-Kreislauf 61 mit dem Wasser-Dampf-Kreislauf 51 der der Gasturbine 10 unmittelbar nachgeschalteten Dampfturbinenanlage 55 zu koppeln. Beide können bspw. zu einer gemeinsamen Versorgung der CO₂-Abscheidungseinrichtung 30 mit Prozessdampf gekoppelt sein.

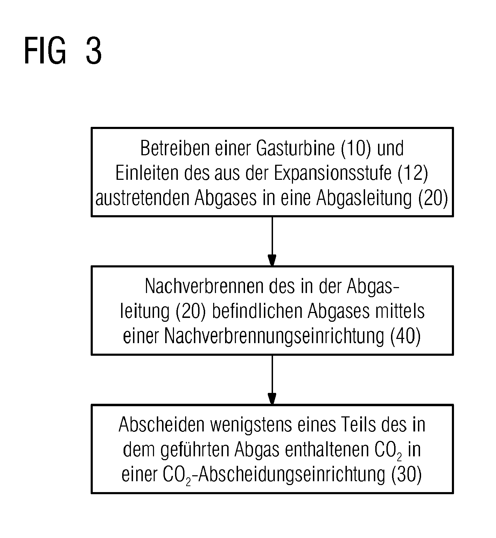

Figur 3 zeigt eine flussdiagrammatische Darstellung einer Ausführungsform des erfindungsgemäßen Verfahrens zum Betrieb einer Gasturbinenanlage 1. Hierbei ist vorgesehen, dass bei einer wie oben beschriebenen Gasturbinenanlage 1 die Gasturbine 10 betrieben wird und das aus der Expansionsstufe 12 der Gasturbine 10 austretende Abgas in die Abgasleitung 20 eingeleitet wird; weiter ist ein Schritt des Nachverbrennens von Brennstoff, unter Hinzunahme des in der Abgasleitung 20 befindlichen Abgases mittels einer Nachverbrennungsvorrichtung 40 vorgesehen; und zudem ist ein weiterer Schritt des Abscheidens wenigstens eines Teils des in dem geführten Abgases enthaltenen CO₂ in einer CO₂-Abscheidungseinrichtung 30 vorgesehen.

Weitere Ausführungsformen ergeben sich aus den Unteransprüchen.

## Patentansprüche

1. Gasturbinenanlage (1) umfassend wenigstens eine Gasturbine (10) mit einer Kompressionsstufe (11) und einer Expansionsstufe (12), eine Abgasleitung (20) zur Strömungsführung bei Betrieb der Gasturbine (10) aus der Expansionsstufe (12) austretenden Abgases, sowie eine mit der Abgasleitung (20) fluidtechnisch gekoppelte CO₂-Abscheidungseinrichtung (30) zur Abscheidung wenigstens eines Teils des in dem geführten Abgas enthaltenen CO₂s,
**dadurch gekennzeichnet, dass** in die Abgasleitung (20) zwischen Gasturbine (10) und CO₂-Abscheidungseinrichtung (30) fluidtechnisch eine Nachverbrennungseinrichtung (40) geschaltet ist, welche dazu ausgebildet ist, Brennstoff, insbesondere fossilen Brennstoff, unter Hinzunahme von Abgas nachzuverbrennen.

2. Gasturbinenanlage gemäß Anspruch 1,
**dadurch gekennzeichnet, dass** in die Abgasleitung (20) zwischen Gasturbine (10) und Nachverbrennungseinrichtung (40) fluidtechnisch ein erster Abhitzedampferzeuger (50) geschaltet ist, der mit einem ersten Wasser-Dampf-Kreislauf (51) einer ersten Dampfturbinenanlage (55) gekoppelt ist.

3. Gasturbinenanlage gemäß einem der vorhergehenden Ansprüche,
**dadurch gekennzeichnet, dass** die Nachverbrennungseinrichtung (40) eine Gasturbine (40) ist, welche neben einer Kompressionsstufe (41) eine Expansionsstufe (42) aufweist, die eine Expansion des Abgases auf ein Druckniveau erlaubt, welches dem Druckniveau des in die Kompressionsstufe (41) der betreffenden Gasturbine (40) eingeleiteten Abgases im Wesentlichen entspricht.

4. Gasturbinenanlage gemäß einem der vorhergehenden Ansprüche,
**dadurch gekennzeichnet, dass** die Nachverbrennungseinrichtung (40) eine Gasturbine (40) ist, welche eine Expansionsstufe (42) aufweist, die lediglich eine Expansion auf ein Druckniveau erlaubt, welches über dem Druckniveau des in die Kompressionsstufe (41) der betreffenden Gasturbine (40) eingeleiteten Abgases liegt.

5. Gasturbinenanlage gemäß einem der vorhergehenden Ansprüche,
**dadurch gekennzeichnet, dass** die Nachverbrennungseinrichtung (40) eine Gasturbine (40) ist, welche keine Expansionsstufe (42) aufweist, bzw. deren Expansionsstufe (42) entfernt wurde.

6. Gasturbinenanlage gemäß einem der vorhergehenden Ansprüche,
**dadurch gekennzeichnet, dass** in die Abgasleitung (20) zwischen der CO₂-Abscheidungseinrichtung (30) und der Nachverbrennungseinrichtung (40) ein zweiter Abhitzedampferzeuger (60) fluidtechnisch geschaltet ist, der mit einem zweiten Wasser-Dampf-Kreislauf (61) einer zweiten Dampfturbinenanlage (65) gekoppelt ist.

7. Gasturbinenanlage gemäß Anspruch 6,
**dadurch gekennzeichnet, dass** der zweite Wasser-Dampf-Kreislauf (61) mit dem ersten Wasser-Dampf-Kreislauf (51) fluidtechnisch gekoppelt ist.

8. Gasturbinenanlage gemäß einem der vorhergehenden Ansprüche,
**dadurch gekennzeichnet, dass** in die Abgasleitung (20) zwischen CO₂-Abscheidungseinrichtung (30) und Nachverbrennungseinrichtung (40) fluidtechnisch eine Quencheinheit (70) geschaltet ist, in welcher Wasser in das Abgas eingebracht wird.

9. Gasturbinenanlage gemäß einem der vorhergehenden Ansprüche,
**dadurch gekennzeichnet, dass** in die Abgasleitung (20) zwischen Nachverbrennungseinrichtung (40) und CO₂-Abscheidungseinrichtung (30) ein zweiter Wärmetauscher (90) fluidtechnisch geschaltet ist, der dazu ausgebildet ist, Wärme aus dem Abgas auf mit CO₂ beladenes Waschmittel der CO₂-Abscheidungseinrichtung (30) zu übertragen, welches sich insbesondere in der CO₂-Abscheidungseinrichtung (30) befindet.

10. Gasturbinenanlage gemäß einem der vorhergehenden Ansprüche,
**dadurch gekennzeichnet, dass** die CO₂-Abscheidungseinrichtung (30) neben einer Absorbereinheit (31) auch eine Desorbereinheit (32) aufweist, wobei mindestens die Absorbereinheit (31) dazu ausgebildet ist, bei einem Druck betrieben zu werden, der über dem freien Umgebungsdruck, insbesondere mindestens 100% über dem freien Umgebungsdruck liegt.

11. Verfahren zum Betrieb einer Gasturbinenanlage (1) umfassend wenigstens eine Gasturbine (10) mit einer Kompressionsstufe (11) und einer Expansionsstufe (12), eine Abgasleitung (20) zur Strömungsführung bei Betrieb der Gasturbine (10) aus der Expansionsstufe (12) austretenden Abgases, sowie eine mit der Abgasleitung (20) fluidtechnisch gekoppelte CO₂-Abscheidungseinrichtung (30) zur Abscheidung wenigstens eines Teiles des in dem geführten Abgas enthaltenen CO₂s,
wobei die folgenden Schritte umfasst sind:
- Betreiben der Gasturbine (10) und Einleitung des aus der Expansionsstufe (12) austretenden Abgases in die Abgasleitung (20);
- Nachverbrennen von Brennstoff, insbesondere von fossilen Brennstoff, durch Hinzunahme des in der Abgasleitung (20) befindlichen Abgases mittels einer Nachverbrennungseinrichtung (40);
- Abscheiden wenigstens eines Teils des in dem geführten Abgas enthaltenen CO₂ in einer CO₂-Abscheidungseinrichtung (30);

12. Verfahren gemäß Anspruch 11,
**dadurch gekennzeichnet, dass** die Abgasführung zwischen der Nachverbrennungseinrichtung (40) und der CO₂-Abscheidungseinrichtung (30) im Wesentlichen isobar erfolgt;

13. Verfahren gemäß Anspruch 11 oder 12,
**dadurch gekennzeichnet, dass** die CO₂-Abscheidungseinrichtung (30) wenigstens bereichsweise bei einem Druck betrieben wird, der über dem freien Umgebungsdruck, insbesondere mindestens 100 % über dem freien Umgebungsdruck liegt.

14. Verfahren gemäß einem der Ansprüche 11 bis 13, **dadurch gekennzeichnet, dass** die Nachverbrennungseinrichtung (40) derart betrieben wird, dass sich der Druck des in Bezug auf die Nachverbrennungseinrichtung (40) abstromseitigen Abgases um wenigstens 100 % erhöht, bevorzugt um wenigstens 200 % und ganz besonders bevorzugt um wenigstens 400 % erhöht im Vergleich zum aufstromseitigen Druck;

15. Verfahren gemäß einem der Ansprüche 11 bis 14, **dadurch gekennzeichnet, dass** die Nachverbrennungseinrichtung (40) derart betrieben wird, dass sich die Menge an O₂ pro Volumen in dem in Bezug auf die Nachverbrennungseinrichtung (40) abstromseitigen Abgas im Vergleich zur aufstromseitigen Menge um wenigstens 50 % verringert, bevorzugt um wenigstens 70 % verringert;
